# EUROPEAN PATENT APPLICATION

(11) **EP 4 442 099 A1**
(43) Date of publication of application: **09.10.2024**
(21) Application number: 22901454.3
(22) Date of filing: 02.12.2022
(51) Int. Cl.: A01D 34/416

(54) **ROTARY CUTTER FOR MOWER**

(30) Priority: 03.12.2021 JP 2021196971
(71) Applicant: Starting Industrial Co., Ltd., Tokyo 167 0034 (JP)
(72) Inventor: YAMADA Tetsuya, Tokyo 167-0034 (JP)
(74) Representative: Kilian Kilian & Partner mbB
(86) International application number: PCT/JP2022/044627
(87) International publication number: WO 2023/101024

(57) **Abstract**

There is provided a rotary cutter for a mower capable of replacing a cord includes: the cord configured to mow grass by rotating; a reel that houses the cord and configured to feed out the cord while intermittently rotating; a case main body that houses the reel; a cover that covers the case main body; a pressing body that protrudes from the case main body and configured to move in an axial direction by pressing the pressing body to intermittently rotate the reel; and a flange protruding body that protrudes from a surface of a reel flange of the reel and has a concave-convex shape on an outer circumferential side surface of the flange protruding body. The flange protruding body and the reel are housed in the cover during grass mowing, the concave-convex shape is a shape for rotating the reel by being gripped by a finger, and a region where there is no obstacle to a movement of the finger when the reel is rotated by gripping the concave-convex shape by the finger is provided outside an outer circumferential surface having the concave-convex shape.

## Description

### TECHNICAL FIELD

The present invention relates to a rotary cutter for a mower for performing a mowing work of grass or the like using a cord (mainly made of nylon) extending in a radial direction of a case which is rotationally driven by power of a prime mover or the like via a rotation shaft.

### BACKGROUND ART

In the related art, in this type of rotary cutter, when a cord is worn and the cord housed in a reel is consumed, it is necessary to disassemble the rotary cutter to take out the reel, wind a new cord, and reassemble components.

However, in such a method, when the reel is disassembled and taken out, since related components of the reel and other components are also removed at the same time, there is a high risk of losing these components. For this reason, there are rotary cutters in which a replacement work when the cord is consumed is simplified and in which the cord can be replaced without assembling and disassembling the rotary cutters. For example, a rotary cutter has been proposed in which a through hole is formed in a cylindrical portion (cord winding portion) of a reel, and a cord is passed through the through hole and wound around the cylindrical portion of the reel (see Patent Literatures 1 to 3 and the like).

The rotary cutter described in the related art has a complicated structure and a high production cost, and it takes time and effort to insert and conduct the cord when winding the cord around the reel.

In order to solve this problem, there is known a rotary cutter in which a reel is provided with a recessed groove to simplify manufacturing and processing, and a cord can be replaced without a risk of losing the reel and related components (see Patent Literatures 4 and 5).

### CITATION LIST

### PATENT LITERATURE

Patent Literature 1: JP2509199Y
Patent Literature 2: JP2005-124501A
Patent Literature 3: JP2006-524837A
Patent Literature 4: JP2009-207433A
Patent Literature 5: JP2010-029075A

### SUMMARY OF INVENTION

### TECHNICAL PROBLEM

However, in the related art described above, there is a problem that a pressing body is worn as the grass is mown by the rotary cutter, and it is difficult to perform replacement of the cord (a turning operation by hand).

In view of the above, an object of the present invention is to provide a rotary cutter having continuous stability in terms of ease of cord replacement even when the rotary cutter is used for a long time.

### SOLUTION TO PROBLEM

According to a first aspect of the present invention, a rotary cutter for a mower capable of replacing a cord includes: a cord configured to mow grass by rotating; a reel that houses the cord and configured to feed out the cord while intermittently rotating; a case main body that houses the reel; a cover that covers the case main body; a pressing body that protrudes from the case main body and configured to move in an axial direction by pressing the pressing body to intermittently rotate the reel; and a flange protruding body that protrudes from a surface of a reel flange of the reel and has a concave-convex shape on an outer circumferential side surface of the flange protruding body. The flange protruding body and the reel are housed in the cover during grass mowing. The concave-convex shape is a shape for rotating the reel by being gripped by a finger. A region where there is no obstacle to a movement of the finger when the reel is rotated by gripping the concave-convex shape by the finger is provided outside an outer circumferential surface having the concave-convex shape.

According to a second aspect of the present invention, in the rotary cutter for the mower according to the first aspect of the present invention, the flange protruding body is provided on the reel flange of the reel by any of a fixing method, an adhering method, and a fastening method.

According to a third aspect of the present invention, in the rotary cutter for the mower according to the first aspect of the present invention, the flange protruding body is integrally formed with the reel flange of the reel.

According to a fourth aspect of the present invention, a rotary cutter for a mower capable of replacing a cord includes: a cord configured to mow grass by rotating; a reel that houses the cord and configured to feed out the cord while intermittently rotating; a case main body that houses the reel; a cover that covers the case main body; and a pressing body that protrudes from the case main body and configured to move in an axial direction by pressing the pressing body to intermittently rotate the reel. An upper end portion of the pressing body has a concave-convex shape.

### ADVANTAGEOUS EFFECTS OF INVENTION

According to the present invention, since the flange protruding body and the reel are housed in the cover during grass mowing, the concave-convex shape is a shape for rotating the reel by being gripped by the finger, and a space area that does not cause a rotation obstacle when the concave-convex shape is gripped by the finger and the reel is rotated is provided outside the outer circumferential surface having the concave-convex shape, it is easy to operate by a hand. Since the reel flange is housed in the cover during grass mowing, the reel flange is not worn, so that a cord replacement performance can be maintained even if a grass mowing work is performed for a long time.

Since dust is hardly accumulated inside the pressing body, it is possible to obtain a stable operation of the pressing body.

Further, the above means also has an effect of improving a degree of freedom of design of the pressing body.

### BRIEF DESCRIPTION OF DRAWINGS

FIG. 1 is an external view showing a rotary cutter for a mower according to the present invention.
FIG. 2 is an external view showing a first embodiment of a reel 3 when a cover 2 of the rotary cutter for a mower is removed.
FIG. 3 is a cross-sectional view taken along a line A-A of FIG. 2.
FIGS. 4A and 4B are side views showing a structure of the reel according to the present invention. FIG. 4A shows a reel including a flange protruding body having a concave-convex shape on a reel flange upper portion, and FIG. 4B shows a reel including flange protruding bodies having a concave-convex shape on the reel flange upper portion and a reel flange lower portion.
FIGS. 5A to 5C are views showing another embodiment of the rotary cutter for a mower according to the present invention. FIG. 5A is a sectional view showing the other embodiment of the rotary cutter for a mower, FIG. 5B is an external view showing a gap of a pressing body, and FIG. 5C is an external perspective view showing the pressing body having a concave-convex shape protruding upward from an upper end portion surface of the upper end portion of the rotary cutter for a mower.
FIG. 6 is an external perspective view showing a pressing body according to another embodiment of the pressing body having a concave-convex shape protruding upward from the upper end portion surface of the upper end portion of the rotary cutter for a mower according to the present invention.
FIG. 7 is an external perspective view showing a pressing body according to another embodiment of the pressing body having a concave-convex shape protruding upward from the upper end portion surface of the upper end portion of the rotary cutter for a mower according to the present invention.

### DESCRIPTION OF EMBODIMENTS

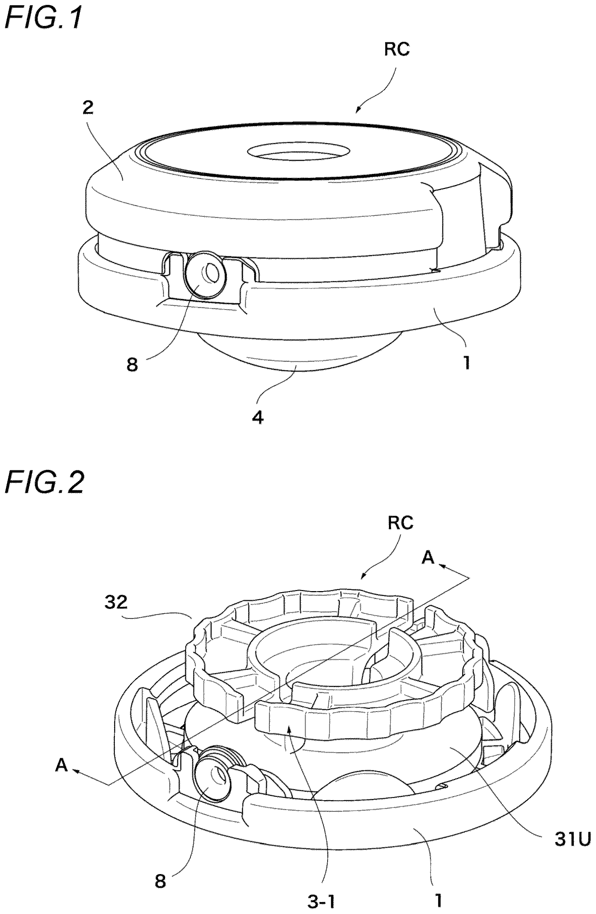

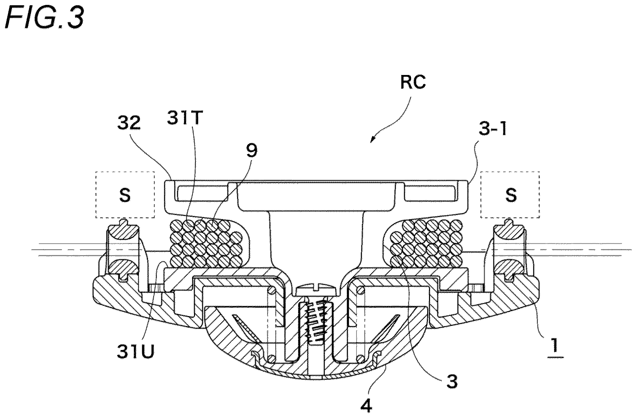

FIGS. 1 to 3 show a rotary cutter for a mower according to an embodiment of the present invention, in which FIG. 1 is an external view, FIG. 2 is an explanatory view showing an internal structure of the rotary cutter for a mower in a state where a cover 2 is removed, and FIG. 3 is a cross-sectional view taken along a line A-A of FIG. 2. RC denotes a rotary cutter, 1 denotes a case (case main body), 2 denotes a cover, 3 denotes a reel, 31T denotes a reel flange upper portion, 31U denotes a reel flange lower portion, 3-1 denotes a concave-convex shape of a reel flange protruding body, 4 denotes a pressing body, 8 denotes a cord guide, 9 denotes a cord, and S denotes a region where there is no obstacle to a movement of fingers.

First, a structure of the rotary cutter for a mower according to the embodiment of the present invention shown in FIGS. 1 to 3 will be described.

A rotary cutter RC for a mower according to the embodiment is a type in which the rotary cutter (pressing body) is hit to feed out a cord. In this structure, a reel 3 provided integrally or separately with a bottomed cylindrical pressing body 4 is incorporated in a central portion of a case 1 so that the pressing body 4 protrudes below the case 1.

Further, a cord guide 8 is provided on an outer circumference end portion of the case 1.

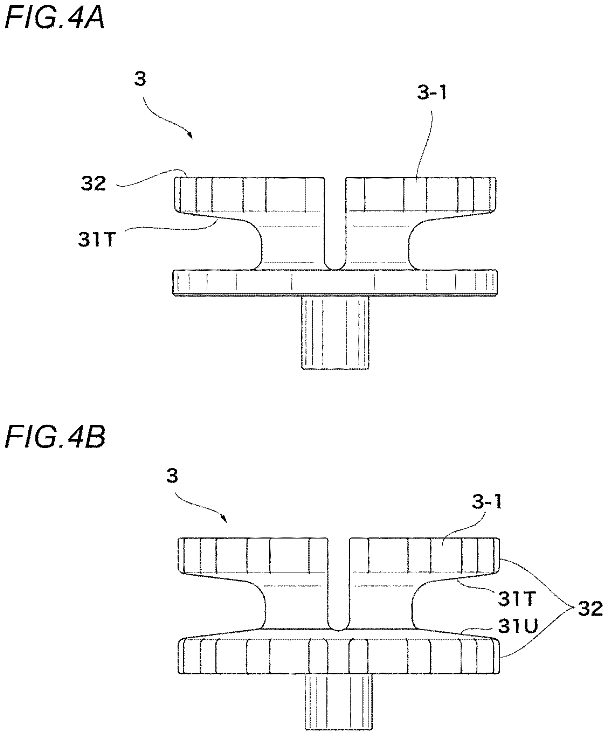

A reel flange upper portion 31T (see FIG. 4A), or the reel flange upper portion 31T and a reel flange lower portion 31U (see FIG. 4B) of the reel according to the embodiment shown in FIGS. 4A and 4B includes a flange protruding body 32 that protrudes from a surface of the upper portion or protrudes from the surfaces of the upper portion and the lower portion, the flange protruding body 32 having a concave-convex shape 3-1 on an outer circumferential side surface. The flange protruding body 32 and the reel 3 are housed in the cover 2 during grass mowing. The concave-convex shape 3-1 is a shape for rotating the reel 3 by being gripped by fingers. A region S (see reference numeral S in FIG. 3) where there is no obstacle to the movement of the fingers when the reel 3 is rotated by gripping the concave-convex shape 3-1 by fingers is provided outside an outer circumferential surface having the concave-convex shape 3-1.

The flange protruding body 32 is provided on a surface of the reel flange by any of a fixing method, an adhering method, and a fastening method, but fastening using fitting or screws is preferable.

The flange protruding body 32 may be integrally formed with the reel flange.

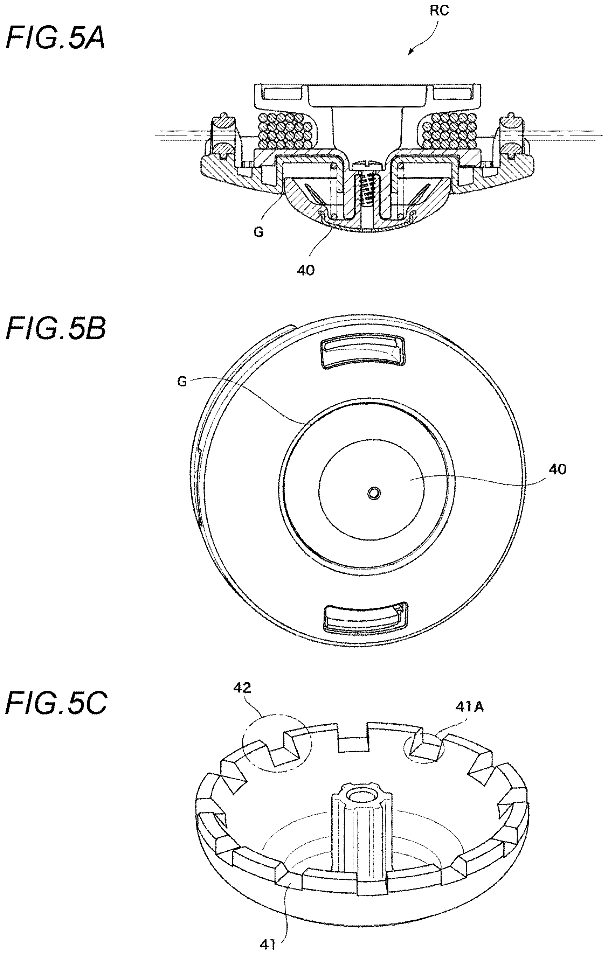

FIGS. 5A to 5C are a view showing another embodiment of the pressing body, and the upper end portion 41 of the pressing body 40 may have an upper end portion concave-convex shape 42 formed on a circumference of the upper end portion so as to protrude upward from an upper end portion surface 41A.

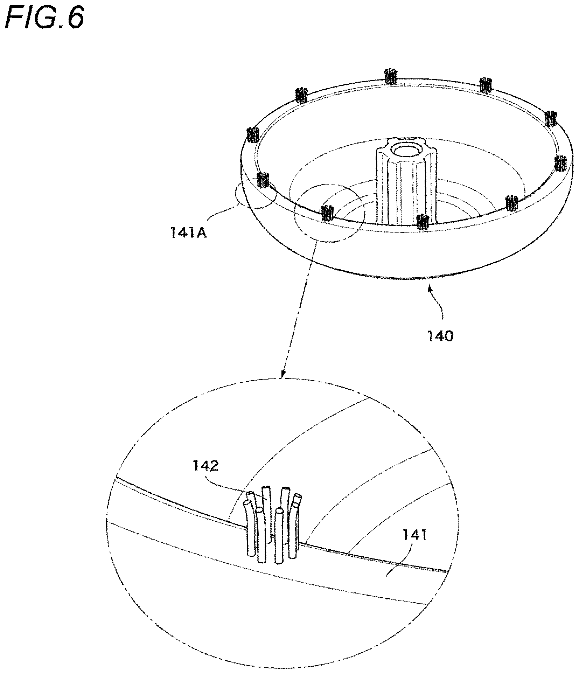

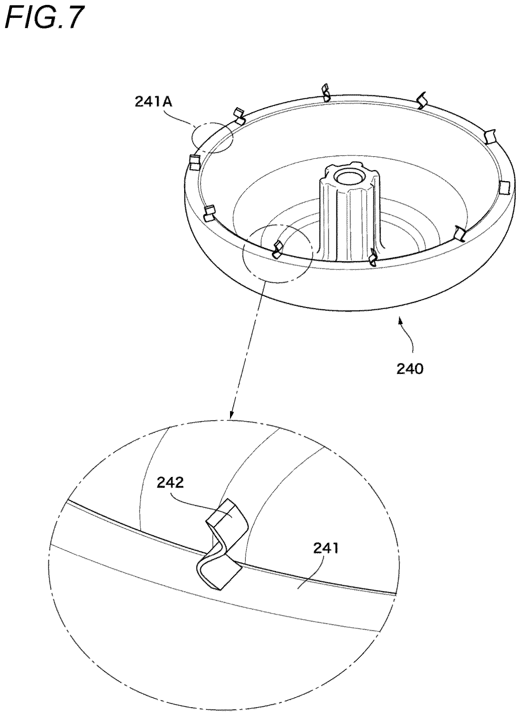

In other embodiments of the pressing body shown in FIGS. 6 and 7, upper end portions 141 and 241 of pressing bodies 140 and 240 are provided with upper end portion concave-convex shapes 142 and 242 having hardness or structure that does not interfere with operations of the pressing bodies 140 and 240, or both.

The upper end portion concave-convex shapes 142 and 242 protrude upward from the upper end portion surfaces 141A and 241A, are attached in plural numbers at equal intervals or randomly on circumferences of the upper end portions as separate bodies by adhesion, welding, insert molding, fastening, or the like with the pressing body, or are provided in an integral form by integral molding (the same part) with the pressing body.

The upper end portion concave-convex shapes 42, 142, and 242 provided on the upper end portions 41, 141, and 241 of the pressing body have a function of hitting the pressing body against the ground surface in order to feed out the cord when a work is performed using the rotary cutter for a mower according to the present invention, scraping out dust that has entered and accumulated particularly from a gap G of the pressing body during a grass mowing work, when the pressing body is pressed, and discharging the dust from the gap (corresponding to a concave portion) formed by the upper end portion concave-convex shape, thereby stabilizing the operation of the pressing body.

This function also acts at the time of cord replacement to stabilize the operation of the pressing body.

In addition, since the rotary cutter for a mower according to the present invention has such a function, it is possible to obtain a stable operation of the pressing body since dust is hardly accumulated inside the rotary cutter for a mower.

The rotary cutter for a mower has a structure in which the case 1 and the reel 3 are engaged with each other and the reel 3 and the cover 2 are engaged with each other by a concave-convex fitting method. When the pressing body 4 is hit against the ground surface, the engagement between the case 1 and the reel 3 is released by pressing the pressing body 4 inward, the reel 3 is rotated, and a cord (not shown) wound around the reel 3 is fed out, and further the reel 3 pressed inward is engaged with the cover 2, temporarily stops the rotation, but returns to an original position by an elastic force of an incorporated spring (not shown), and the case 1 and the reel 3 are engaged again to fix the reel 3. It is noted that a drive rotation shaft (not shown) of a prime mover is connected via a nut member fixed in the cover 2.

In the rotary cutter for a mower having the configurations shown in FIGS. 1 to 7, when the cord is replaced in a case where the cord is consumed, the cover 2 is removed, a portion located at a center of a new long cord having a desired length is fitted from above and attached to a cord fitting concave groove provided in the reel 3 in an empty state engaged with the case 1 and the cord guide 8 disposed on the same straight line as the cord fitting concave groove, and in a state in which both end portions of the cord respectively protrude from the cord guide 8 by an appropriate length, a portion of the pressing body 4, which is a separate body from the reel 3 or to which the reel 3 is rotatably attached, is gripped, the concave-convex shape 3-1 provided on the reel flange upper portion of the reel 3 or outer circumferential side surface portions of the flange protruding bodies 32 provided on the reel flange upper portion and the reel flange lower portion is used as a handhold to be gripped by a hand and is manually rotated, so that the cord 9 can be wound around the reel 3, and a winding operation of the cord can be easily and quickly performed. Since the cord can be wound in a state where the reel 3 is fixed to the case 1, attachment and winding works of the cord 9 on the reel 3 can be easily and quickly performed. Further, in the replacement work of the cord, since it is only necessary to remove the cover 2 as described above, and other components are not removed, there is little risk of losing components of the rotary cutter.

Although various embodiments have been described above with reference to the drawings, the present invention is not limited to these examples. It is apparent to those skilled in the art that various changes or modifications can be conceived within the scope described in the claims, and it is understood that the changes or modifications naturally fall within the technical scope of the present invention. In addition, the constituent elements described in the above embodiments may be freely combined without departing from the spirit of the invention.

The present application is based on a Japanese patent application (Japanese Patent Application No. 2021-196971) filed on December 3, 2021, and the contents thereof are incorporated herein by reference.

### INDUSTRIAL APPLICABILITY

The rotary cutter for a mower according to the present invention has a structure in which there is little risk of losing related components of the reel or other components when replacing the cord, and the reel is easily rotated by a hand when the cord is wound around the reel, and therefore the cord can be easily and quickly attached to the reel, the cord can be rapidly and reliably wound, the structure can be easily manufactured and processed, and manufacturing cost is low.

Accordingly, the rotary cutter for a mower according to the present invention is extremely practical for a mower for lawn or weeds.

### REFERENCE SIGNS LIST

1 case
2 cover
3 reel
3-1 concave-convex shape (of side surface of flange protruding body)
4, 40, 140, 240 pressing body
8 cord guide
9 cord
31U reel flange lower portion
31T reel flange upper portion
32 flange protruding body
41, 141, 241 upper end portion of pressing body
41A, 141A, 241A upper end portion surface of pressing body
42, 142, 242 concave-convex shape of upper end portion of pressing body
G gap of pressing body
RC rotary cutter
S region where there is no obstacle to a movement of fingers when the reel 3 is rotated by hand

## Claims

1. A rotary cutter for a mower capable of replacing a cord, the rotary cutter comprising:
the cord configured to mow grass by rotating;
a reel that houses the cord and configured to feed out the cord while intermittently rotating;
a case main body that houses the reel;
a cover that covers the case main body;
a pressing body that protrudes from the case main body and configured to move in an axial direction by pressing the pressing body to intermittently rotate the reel; and
a flange protruding body that protrudes from a surface of a reel flange of the reel and has a concave-convex shape on an outer circumferential side surface of the flange protruding body, wherein
the flange protruding body and the reel are housed in the cover during grass mowing,
the concave-convex shape is a shape for rotating the reel by being gripped by a finger, and
a region where there is no obstacle to a movement of the finger when the reel is rotated by gripping the concave-convex shape by the finger is provided outside an outer circumferential surface having the concave-convex shape.

2. The rotary cutter for the mower according to claim 1, wherein
the flange protruding body is provided on the reel flange of the reel by any of a fixing method, an adhering method, and a fastening method.

3. The rotary cutter for the mower according to claim 1, wherein
the flange protruding body is integrally formed with the reel flange of the reel.

4. A rotary cutter for a mower capable of replacing a cord, the rotary cutter comprising:
the cord configured to mow grass by rotating;
a reel that houses the cord and configured to feed out the cord while intermittently rotating;
a case main body that houses the reel;
a cover that covers the case main body; and
a pressing body that protrudes from the case main body and configured to move in an axial direction by pressing the pressing body to intermittently rotate the reel, wherein
an upper end portion of the pressing body has a concave-convex shape.
